# EUROPEAN PATENT APPLICATION

(11) **EP 2 373 020 A1**
(43) Date of publication of application: **05.10.2011**
(21) Application number: 10158195.7
(22) Date of filing: 29.03.2010
(51) Int. Cl.: H04N 7/167

(54) **Tracing unauthorized use of secure modules**

(71) Applicant: Irdeto B.V., 2132 HD Hoofddorp (NL)
(72) Inventor: Schipper, Robert, 5509 NX, Veldhoven (NL)
(74) Representative: Visscher, Erik Henk

(57) **Abstract**

At least methods and systems for generating tracing data for tracing rogue secure modules in a population of secure modules are described wherein said rogue secure modules are configured for unauthorized provisioning of control words to a control word sharing network. One method comprises: executing a predetermined number of tracing experiments on said population, wherein each of said tracing experiments comprises: sending at least one tracing event message to each secure module in said selected population, wherein event information in said tracing event message is used to select at least part of said secure modules in said population to generate a tracing event; in response to the reception of said at least one tracing event message, a tracing event detector monitoring for a predetermined time the presence of at least one tracing event in said control word sharing network; and, storing tracing data in an event database, said tracing data comprising said event information and event detection information indicating whether or not a tracing event is detected.

## Description

### Field of the invention

The invention relates to tracing unauthorized use of secure modules, and, in particular, though not necessarily, to method and a system for generating tracing data for tracing rogue secure modules in a population of secure modules, to a method for tracing rogue secure modules in a population of secure modules on the basis of tracing data, to an event generator, a conditional access data transmitter, an event detector, an event analyzer and a secure module for use in and/or with such system and computer product programs using such methods.

### Background of the invention

Conditional access systems for digital video broadcast (DVB) transmissions are well known and widely used in conjunction with pay television services. Such systems provide secure transmission of a broadcast stream comprising one or more services to a digital receiver contained for example in a set-top box or a mobile terminal supporting broadcast services. To protect the broadcast services from unauthorized viewing, the data packets are scrambled (encrypted) at the transmitter side with a randomly generated encryption key commonly referred to as a control word. Further security may be provided by periodically changing the control words so they are only valid for a certain period (a so-called crypto period). In that case, for each crypto period the receiver side should be provided with a new control word. Typically these control words are transmitted in encrypted form to the receiver using so-called entitlement control messages (ECMs). In order retrieve control words from the ECMs, the receiver is provided with a secure module, e.g. a smart card or a secure software module, comprising a secure key for decrypting the ECMs.

Despite efforts to protect the services from unauthorized viewing, an adversary might be able to reverse engineer the secure module, the receiver or monitor the communication interface to extract the information that is used for unauthorized control word distribution. In that case an operator may use a tracing scheme for locating the compromised smart card in the smart card population. Tracing methods are known. For example US 7,155,611 describes a tracing method based on a binary search, wherein an unauthorized smart card may be traced in an iterative way by sending different keys to different groups in the smart card population and monitoring the key information generated by the adversary.

One problem associated with the prior art is that it relies on the premise that in unauthorized redistribution of control words a single rogue smart card is used. In practise however adversaries often use multiple rogue smart cards in order to provide control words to its subscribers. For example, control words may be re-distributed using a server connected to a number of rogue smart cards. Such a redistribution server may switch between different cards using a certain algorithm so that known tracing methods based on a binary scheme may no longer be suitable. One way of solving this problem may be a tracing scheme where a smart card may be identified on the basis of a watermarked control word as described in US 2000/0323949.

Such solution however would require inspection of the control word stream origination from the adversary. Typically, such control word streams are secured, thereby requiring reverse engineering before analysis of control words is possible. Moreover, watermarking such control word may be easily detected and evaded by the adversary.

Further problems associated with the prior art relate to the fact that a tracing method should not adversely affect the processing of services associated with legitimate subscribers and that it should not be detectable or at least very hard to detect by an adversary. Hence, there is a need in the art for improved methods and systems, which allow tracing and identification of secure modules, e.g. smart cards, participating in an unauthorised use system without adversely affecting legitimate subscribers.

### Summary of the invention

It is an object of the invention to reduce or eliminate at least one or more drawbacks associated with known tracing methods. In a first aspect the invention may relate to a method for generating tracing data, preferably an event database comprising tracing data, for tracing rogue secure modules in a population of secure modules wherein said rogue secure modules may be configured for unauthorized provisioning of control words to a control word sharing network, wherein said method may comprise: executing a predetermined number of tracing experiments on said selected population, wherein each of said tracing experiments may comprise: sending at least one tracing event message to each secure module in said selected population, wherein event information in said tracing event message is used to select at least part of said secure modules in said population to generate a tracing event; in response to the reception of said at least one tracing event message, a tracing event detector monitoring for a predetermined time the presence of at least one tracing event in said control word sharing network; and, storing tracing data in an event database, said tracing data comprising said event information and event trigger information indicating whether or not a tracing event is detected.

The method allows the execution of a predetermined number of tracing experiments on the basis of the generation of tracing events in a part of a smart card population, detection of such tracing events and subsequent storage of the data associated with the tracing events. In contrast with known tracing schemes the method allows identification of multiple rogue smart cards in a smart card population without the need of special firmware to be installed in the smart cards. Further, the method allows batch processing. An pay-TV operator may locally generate tracing data and subsequently send these tracing data for analysis to another party.

In an embodiment, each secure module may be associated with a unique identifier, preferably a randomized unique identifier. Randomness may provide the advantage that information in the identifiers is equally distributed over the smart card population.

In one embodiment said tracing event messages may be sent in an entitlement control message to said population of secure modules. The entitlement control message typically is transmitted every 2-10 seconds to the smart card population and thus allows fast generation of tracing data, wherein each entitlement control message may generate one tracing experiment. Hence, the faster the crypto period in a conditional access system, the faster unauthorized use of smart cards may be traced. In another embodiment said tracing event messages may be sent in an entitlement management message to said population of secure modules.

In another embodiment, the method may further comprise: a secure module generating a tracing event on the basis of event information, preferably randomized event information, in said event message and at least a part of the unique identifier associated with said secure module, preferably said secure module generating a tracing event when event information in said event message matches at least part of said unique identifier. In this embodiment, a tracing event is generated in the smart card by matching event information sent in an event message (e.g. an ECM) to the smart cards with at least part of a unique identifier associated with a smart card. For example a marker comprising a unique random bit sequence or a random sequence of keys sent in an EMM to a smart card may be used for identifying the targeted smart cards and for deciding whether or not to generate a tracing event. A decision for generating an event may for example relate to the matching of part of the unique identifier to part of the event information (e.g. a bit value at a bit position or a modified sequence of ECM pages).

In yet another embodiment said event information in said tracing event message may comprise an instruction to execute an event generating function in said secure module or wherein said event information in said tracing event message induces a tracing event in said secure module.

In one embodiment, the method may comprise: said tracing event generating a disturbance in the control word provisioning to a receiver connected to said control word sharing network, preferably a delay in the control word provisioning to said receiver; said tracing event detector monitoring the control word stream transmitted to said receiver; and, determining the presence of a tracing event if said disturbance in said control word stream is detected. The invention thus allows the generation of very small detectable disturbances, e.g. in the form of a delay, in the control word provisioning. Such detectable tracing events provide the advantage that such tracing events do not adversely affect legal subscriber while at the same time such events are also very difficult to detect by an adversary. The invention allows a tracing event to be a very small detectable signal as errors in measuring tracing events are averaged out when performing a sufficiently large amount of experiments.

In another embodiment, the method may comprise: said tracing event generating a disturbance, preferably a watermark, in the output of a receiver connected to said control word sharing network; said tracing event detector monitoring the output signal of said receiver; and, determining the presence of a tracing event if said disturbance in the output signal is detecting. Hence, tracing events may also relate to disturbances in the output of the detector.

In another aspect the invention may relate to a method for tracing rogue secure modules in a population of secure modules on the basis of tracing data generated by the method as described above. The method may comprise: providing unique identifiers associated with the population of secure modules on which tracing experiments were preformed; and, identifying the presence of one or more rogue secure modules in said population on the basis of said unique identifiers and the tracing event data. This method allows identification of rogue smart cards by post-processing earlier generated tracing data.

In one embodiment, for each tracing experiment stored in said event data the method may comprise: providing event information and event detection information; matching at least part of said event information with said unique identifiers if said event trigger information indicates detection of an event; assigning a penalty point to each unique identifier for which a match is found; and, identifying one or more rogue secure modules on the basis of the amount of penalty points assigned to each unique identifier. Statistical analysis of the tracing data allows identification of multiple rogue smart cards in a smart card population. Moreover, the analysis is fault-proof as errors in the measured data may be averaged out.

In a further aspect, the invention may relate to a system for tracing rogue secure modules in a population of secure modules, wherein said secure modules may be configured to receive scrambled data originating from a conditional access system and wherein said rogue secure modules may be configured for unauthorized provisioning of control words to a control word sharing network, wherein said system may comprise: an event generator for initiating a predetermined number of tracing experiments on said population of secure modules; and, for instructing a conditional access data transmitter in the conditional access system to sent event messages to said population of secure modules wherein event information in said tracing event message is used to select at least part of said secure modules in said population to generate a tracing event; at least one tracing event detector configured for receiving said at least one tracing event message; and, in response the reception of said at least one tracing event message, monitoring for a predetermined time the presence of at least one tracing event in said control word sharing network; and, for storing tracing data in an event database, said tracing data comprising said event information and event trigger information indicating whether or not a tracing event is detected.

In one embodiment, the system may further comprise: a data analyzer for identifying one or more rogue secure modules in said population of secure modules on the basis of tracing data stored in said event database, said data analyzer being configured to providing unique identifiers associated with the population of secure modules on which tracing experiments were performed; and said data analyzer being configured for identifying the presence of one or more rogue secure modules in said population on the basis of said unique identifiers and the tracing event data.

In yet a further aspect, the invention may relate to a conditional access data transmitter, preferably a head-end, for use with a tracing system as described above, wherein said conditional access data transmitter may be configured for receiving instruction from an event generator, , and for sending event messages, preferably in an encrypted message, more preferably in entitlement control messages and/or in entitlement management messages, to said population of secure modules, wherein event information in said tracing event message is used to select at least part of said secure modules in said population to generate a tracing event.

In an aspect, the invention may relate to a tracing event detector for use in a tracing system as described above, wherein said tracing event detector may be configured for receiving said at least one tracing event message; and, in response the reception of said at least one tracing event message, monitoring for a predetermined time the presence of at least one tracing event in said control word sharing network; and, for storing tracing data in an event database, said tracing data comprising said event information and event trigger information indicating whether or not a tracing event is detected.

In another aspect, the invention may relate to a data analyzer for use in a tracing system as described above, wherein said data analyzer may be configured for processing tracing experiments stored in said event data; said data analyzer may be configured to provide event information and event trigger information; to match at least part of said event information with said unique identifiers if said event trigger information indicates detection of an event; to assign a penalty point to each unique identifier for which a match is found; and, to identify one or more rogue secure modules on the basis of the amount of penalty points assigned to each unique identifier.

In yet another aspect, the invention may relate to a secure module, preferably a smart card, for use with a tracing system as described above, wherein said secure module may comprise: at least one tracing event generating function; said function being instructed by event information sent in tracing event messages to said secure module.

The invention may also relate to a computer program product for generating tracing data comprising software code portions configured for, when run on one or more computers, executing the method for generating tracing data as described above; or, a computer program product comprising software code portions configured for, when run on one or more computers, executing the method for tracing rogue secure modules in a population of secure modules on the basis of tracing data generated by the method as described above.

The invention will be further illustrated with reference to the attached drawings, which schematically show embodiments according to the invention. It will be understood that the invention is not in any way restricted to these specific embodiments.

### Brief description of the drawings

**Fig. 1** depicts a schematic of a conditional access system comprising a tracing system according to one embodiment of the invention.
**Fig. 2** depicts a process for generating tracing data according to one embodiment of the invention.
**Fig. 3** depicts a schematic of unique identifier database layout according to one embodiment of the invention.
**Fig. 4** depicts a process of identifying unauthorized use in a smart card population according to one embodiment of the invention.
**Fig. 5** illustrates method for generating tracing data according to another embodiment of the invention.

### Detailed description

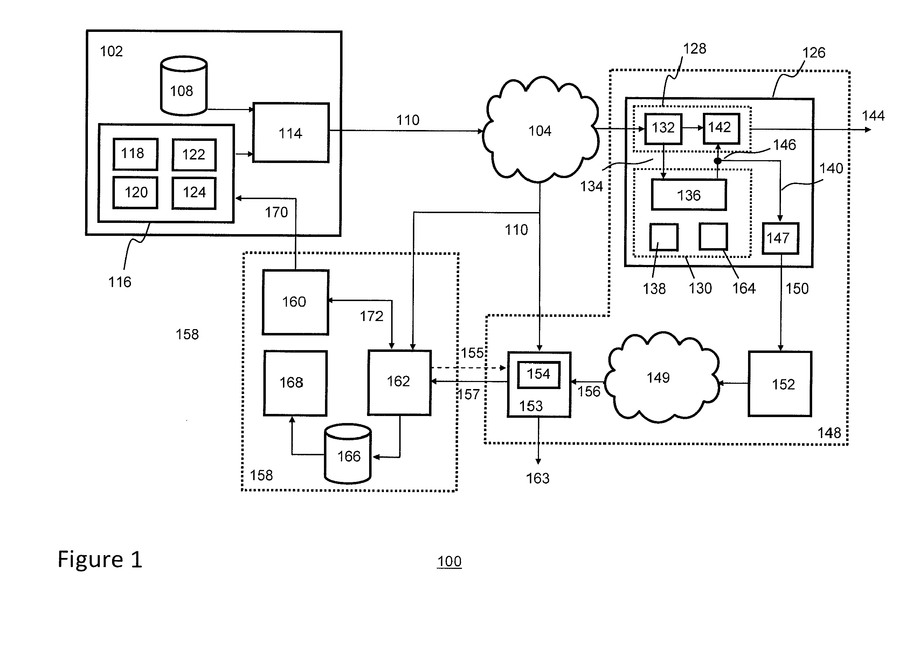

**Fig. 1** depicts a schematic of a conditional access system (CAS) **100** comprising a tracing system according to one embodiment of the invention. The CAS system may comprise a conditional access data transmitting system **102,** sometimes referred to as a head-end, broadcasting scrambled data streams via one or more broadcast channels **104** to conditional access (CA) devices **126.** The CA devices may relate to set-top boxes and/or mobile conditional access terminals. Typically the head-end is broadcasting to a large number of CA devices associated with subscribers to the content services offered by an operator. Typically services rendered by the CAS system may include live broadcast services, content or video on demand (VoD) or content replaying services using e.g. a network personal video recorder (NPVR).

In order to prevent unauthorized access to these content services, the head-end is configured for transmitting content in a scrambled data stream **110,** e.g. an MPEG-2 transport stream or a multi-program transport stream, to the CA devices, which are configured to descramble the data stream using secret key information.

A multiplexer/scrambler **114** in the head-end may multiplex various content streams **108** into a data stream, which is scrambled on the basis of encryption keys (usually referred to as control words or in short CWs). The content streams may comprise elementary streams of service streams comprising content, e.g. TV programs and/or other multimedia information. The scrambled data stream may relate to a transport stream comprising transport stream (TS) packets, each having a header and a scrambled payload wherein the payload comprises units of data from a particular elementary stream. Depending on the content and format (e.g. HDTV) typically an MPEG-type multi-service transport stream associated with one transmission frequency may comprise approximately a predetermined number (approximately ten) of television channels. A pay-TV operator service package typically includes more than ten television channels so a number of separate multi-service transport streams at different transmission frequencies are used for broadcasting all service channels.

The provisioning of the scrambled data to the CA devices may be controlled by a CA control system **116.** The CA control system may comprise a control word generator (CWG) **118** for periodically generating CWs, which are used by the multiplexer/scrambler **114** for scrambling the payload of the data packets using a scrambling algorithm. Typical algorithms may include the DVB-Common Scrambling Algorithm (DVB-CSA), the Data Encryption Standard (DES) and the Advanced Encryption Standard (AES). A CW is only valid during a predetermined period of time (usually referred to as the crypto period). Crypto period durations in the range between approximately 1 and 10 seconds are typically used.

The head-end may provide the CA devices **126** with metadata (e.g. PAT, PMT) associated with the services carried in the payload of the scramble data stream. Information in the header of the TS packets, e.g. the PID values and scrambling (odd/even) status bits, may be used by the CA devices to select the appropriate CWs for descrambling of the TS packet payload.

Further, the head-end may send information regarding usage rights of the services in the transport stream in an entitlement management message (EMM) to the CA devices. Such EMMs may be generated by an EMM generator (EMMG) **120** in the CA control system. The EMM is further used to convey one or more higher-level product keys Pₖ (sometimes referred to as service keys) to the secure modules of the CA devices. The product key is used by the secure module to decrypt ECMs for recovering the CW. For security reasons the service key may be refreshed on a regular basis (e.g. every 1-10 days).

The CA control system may further an entitlement control message generator (ECMG) **122** connected to the CWG. The ECMG encrypts the CWs under a product key Pₖ and produces entitlement control messages (ECMs) carrying the CW in an encrypted form. The ECMs are transmitted together with the scrambled data stream to the CA devices. A synchronizer **124** may synchronize the ECM play-out relative to the crypto periods in the scrambled data stream. In one embodiment such synchronizer may relate to a SimulCrypt Synchroniser (SCS) as described in ETSI TS 103197 v 1.4.1.

Although the head-end is typically employed to transmit transport stream (TS) packets in accordance with the MPEG-2 standards (International Standard ISO/IEC 13818-1) via a terrestrial, satellite or cable broadcast system, the methods and systems outlined herein may also be employed to provide scrambled content in Internet Protocol (IP) packets to a receiver using broadcasting, multicasting or point-to-point transmission techniques.

The CA devices **126** are configured to descramble the scrambled data stream transmitted by the head-end. Each CA device may comprise a receiver **128** connected via a secure interface to at least one secure module **130.** Such secure module may be a secure hardware module, e.g. a smart card or a secure software module. The receiver comprises a filter **132** for filtering EMMs and ECMs **134** out of the transport stream. A processor **136** in the smart card may subsequently decrypt filtered ECMs using a product key stored in a secure memory **138** of the smart card and subsequently returns CWs **140** to a descrambler **142** in the receiver, which uses the CWs for descrambling the scrambled data packets that are further processed by a content decoder for producing a signal **144** to a displaying device.

Although **Fig. 1** only depicts one CA device, in reality the CAS system may broadcast services to a large population of CA devices. Such a population may comprise millions of CA devices, each being equipped with a smart card associated with a subscription to all or at least part of the conditional access services offered by an operator. One or more CA devices in the population may be compromised in order to achieve unauthorized access to the decryption information, e.g. CWs, generated by the smart card. Unauthorized access may be realized by tapping the interface **146** between the smart card and the receiver.

The compromised CA device may be part of an unauthorized CW sharing system **148,** which may further comprise a CW server **152,** a secure CW distribution infrastructure **149** (a network) and rogue receivers **153.** Typically, such CW sharing system may use several compromised CA devices for providing CWs to the rogue receivers.

A compromised CA device **126** may comprise a sharing module **147** for transforming the tapped CWs **140** into an input stream **150** for a CW server **152.** The CW server may be configured to form a CW stream using CWs originating from the compromised CA devices. Such formation may for example be realized by switching between the different CW signals generated by the compromised CA devices on the basis of a predetermined algorithm.

The CW server may send the thus formed CW stream to one or more rogue receivers **153** connected to the unauthorized CW sharing network. These rogue receivers may relate to a CA device, a reprogrammable TV receiver or an application running on a computer. A descrambler **154** in a rogue receiver may use the CWs **156** originating from the unauthorized CW sharing network to descramble the scrambled data in the transport stream **110.**

If an operator becomes aware of the existence of unauthorized use of one or more CA devices, the operator may want to identify these rogue CA devices **126** in such a way that authorized subscribers are not adversely affected. To that end, the CAS system may comprise or be connected to a tracing system **158** for tracing compromised CA devices in a population of CA devices. The tracing system may be configured to trace compromised, or at least suspected, CA devices by inducing a detectable tracing event in a selectable subset of the CA device population.

For the purpose hereunder, a tracing event is defined as an event generating a detectable signal in the CW signal sent to rogue receivers. A tracing event may relate a small disturbance, e.g. a deviation in the timing of certain data, an erroneous data piece and/or data structure in one of the data streams, typically the CW stream **146,** sent by the compromised smart card to the CA sharing netowrk. In such form, tracing events may not be distinguished (or at least very difficult to distinguish) from errors and/or glitches originating from other sources. Such tracing events are thus very difficult to detect by an adversary. Typically, deviations and/or errors associated with a tracing event are configured to fall within the allowable signal processing margins of typical CA devices. Alternatively, a tracing event may trigger an error, which may be dealt with by an error-handling procedure in the the conditional access device. The smart card and the associated electronics in the CA device are therefore capable of processing the tracing events such that these tracing events are not observable by a legal subscriber of a smart card.

The tracing system **158** may comprise a tracing event generator **160** in the head-end and an event detector **162** in or associated with at least one rogue receiver **153,** which is configured to receive CWs from the unauthorized CW sharing network **148.** The tracing event generator may use control messages **170** to instruct the CA control system to generate one or more tracing events in a selectable subset of the CA device population. If a compromised CA device is amongst the selected subset of CA devices, tracing events, e.g. a delay in the CW provisioning, may be detectable in the CW stream **150** originating from compromised CA devices. In this way, a tracing event may be detected by the event detector **162.** The tracing event generator may also signal **172** a detection trigger and the detection period, i.e. period of time in which the tracing event may be detected, to the event detector **162.** Alternatively and/or in addition, the detection trigger and/or the detection period may be inserted in the ECMs broadcasted to the CA devices and the event detector.

In one embodiment, the tracing system may generate tracing events in a smart card in the form of detectable delays in the provisioning of CWs. Such tracing event may be realized in different ways.

In one embodiment tracing events may introduced by instructing the processor **136** in the smart card to delay (within certain boundaries) the timing of the transmission of the decrypted CWs to the descrambler in the receiver. Such delay may be realized by temporarily buffering one or more CWs before sending them to the descrambler.

A tracing event may be triggered on the basis of event messages sent via the data stream **110** to the smart cards. For example, in one embodiment, the event generator may instruct the ECMG to insert an event message into ECMs sent to a smart card population.

In one embodiment, such event message may comprise an instruction to the smart card to introduce an event on the basis of one or more event parameters. A delay triggered in the smart card may be in the range between 100 ms and 500 ms, i.e. big enough to be measured by the event detector and small enough to fall within the processing margins of the descrambling processor, which may be in the order of seconds. When introduced randomly, such delays generated by the tracing system are very difficult to distinguish from other types of delays introduced by other sources in the network, in the head-end or a CA device.

An event detector **152** connected to an unauthorized receiver may be configured to measure small disturbances in the CW provisioning to the descrambler. To that end, the event detector may comprise one or more sensors **155** for probing e.g. the CW stream **156** and/or the output signal **163** of the rouge receiver **153** and for generating a detection signal **157.**

During the tracing process, the event detector may sometimes measure "faults", i.e. a result that is due to an effect other than the event generator. Hence, it is desired that the tracing system is fault-tolerant in the sense that such measuring faults do not affect the result of the tracing system. Further, on the basis of the tracing events measured by the event detector **162,** the tracing system should be able to identify smart cards, in particular rogue smart cards, in the smart card population.

To that end, the tracing system may be configured to associate each smart card in the smart card population with a unique identifier. In one embodiment, such unique identifier may comprise a randomized sequence of information pieces, e.g. a sequence of bits of a predetermined length N or a randomized sequence of service keys. The unique identifiers may be generated on the basis of a predetermined function F_{M} using, e.g. personal data, i.e. the smart card serial number, the chip set serial number and/or a secret key K_{M} as input parameters. The function may relate a DES and/or a hash function.

The randomness property of the unique identifiers ensures that the information in the identifiers is equally distributed over the smart card population. For example, the F_{M} may be configured to generate unique identifiers such that for every bit field in approximately 50% of the unique identifiers comprise a one bit value ("1") and the other 50% comprise a zero bit value ("0"). Such property may be used by the tracing system to generate in approximately 50% of the targeted smart card a tracing event. Further, the randomness may effectively hide the tracing process from adversaries. The event generator may instruct the head-end to distribute such a unique identifier to each smart card or distribute the function F_{M} to all smart cards so they can calculate their own unique identifier that is identical to the one calculated in the head-end.

The CA control system may use EMMs generated by the EMMG to send each smart card such a unique randomized identifier. This way, the tracing system is capable of associating each smart card in the smart card population with a (pseudo)random unique identifier. In one embodiment, the unique identifier may be stored in a memory field in the smart card which is for normal operator usage. In such field one part is allocated to normal operator usage and another part is allocated as a unique identifier field, which may be used by the tracing system for tracing purposes.

The tracing system may use unique identifiers associated with smart cards for tracing and identifying rogue smart cards in a smart card population. The tracing system may execute a process for generating tracing data (the measuring phase) wherein tracing data are generated by sending event messages to each smart card in the smart card population. In the measuring phase a predetermined number of experiments is performed. In each experiment, a tracing message is sent to each smart card in a preselected smart card population, on the basis of event information in the event message part of the smart cards in the smart card population will generate a tracing event. If a rogue smart card is amongst the event generating smart cards, an event detector connected to the control word distribution network associated with the rogue smart card will detect the event. An experiment is concluded by the event detector storing the event information together with information whether an event was detected or not in an event database. This way a predetermined number of experiments are performed by the tracing system wherein for each experiment, new event information in the event message sent to the smart card population will cause a different part of the smart card population to generate a tracing event. Hence, each experiment is defined by the event information and the subsequent detection of a tracing event or the absence thereof.

The tracing data generated during the measuring phase may be stored in an event database **166.** In a subsequent data analyses phase, the tracing data collected during the measuring phase are analyzed by an event analyzer **168.** In one embodiment, one or more "suspected" smart cards may be identified using statistical analyses. In other variants, the results of the analyzed data may be the input for the execution of a further tracing process targeted to the set of smart card identified in an earlier tracing method. This way rogue smart cards may identified in an iterative way.

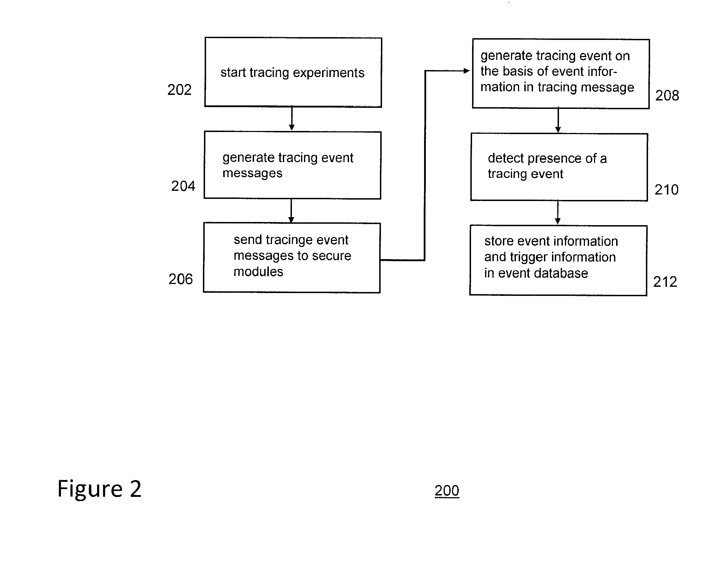

Hence, the tracing system according to the invention may use identifiers, in particular uniformly distributed identifiers, in order to identify which smart cards of a population of smart cards is used without authorization. Further, the system may use statistical analyses in order to identify rogue smart cards. As the tracing method can work with small disturbances, e.g. small variations in delivery timing parameters, tracing is possible without affecting the legal subscribers. Moreover, in contrast with known tracing systems based on a binary search scheme, the tracing system according to invention is collision resistant in the sense that it supports tracing and identification of a plurality of rogue smart cards in a smart card population. Furthermore, the tracing process is suitable for automation and/or very versatile in use in the sense that it allows a separate data measuring (collection) phase and data analyses phase. Hence, data may be generated by a first party and sent for analyses to a second party. Furthermore, the tracing system may be used with legacy smart cards, i.e. smart cards which do not need a special firmware update in order to allow tracing in accordance with the invention. The advantages associated with the tracing system according to the invention, will be more apparent with reference to **Fig. 2-6.**

When starting the measuring phase, the tracing event generator may instruct the ECMG to start including tracing event messages in the ECMs sent by the head-end to the smart card population. Event information in the tracing event message may comprise an instruction for instructing a smart card to generate a specific type of tracing event, e.g. a detectable delay in the CW provisioning. To that end, the smart card may comprise a certain tracing event generating function to generate such tracing event. A tracing event may be generated by the smart card if a certain condition is met on the basis of tracing event targets information in the tracing event message. Alternatively, event information in the tracing event message may induce a tracing event in the smart card on the basis of already existing functionality in the firmware of the smart card. Both cases will be discussed hereunder.

**Fig 2** depicts the process of generating event data **200** according to one embodiment of the invention. In this embodiment, it is assumed that all smart card are configured with a unique identifier stored in a memory of the smart card as described above. Further, in this embodiment, the smart cards in the smart card population comprise a dedicated tracing event generating function in the smart card, which may be triggered by the head-end using tracing event messages.

The process may start by the tracing event generator instructing the ECMG to start a tracing process comprising a predetermined number of experiments (step **202**). In response, the ECMG may generate a tracing event message comprising a tracing event command and tracing event targets information (step **204**). The tracing event targets information may comprise randomized parameters, i.e. at least one binary random event trigger value (DTV) and at least one random unique identifier bit position value (BPV) (i.e. a value for indicating a certain bit position in the unique identifier). This event information is subsequently inserted in ECMs and broadcast to the smart cards (step **206**).

Upon receipt of an ECM comprising such a tracing event message, the tracing event generating function may be triggered. The function may use the event information in the tracing event message, i.e. a bit value at bit position BPV in the unique identifier value of the smart card, in order to determine the generation of a tracing event. A delay in the CW provisioning in a compromised CA device may be generated if the DTV bit value matches the determined bit value (step **208**). Hence, in this way the smart card uses the tracing event targets information in the ECM and the unique identifier in the smart card in order to determine whether or not to generate a tracing event. The generation of a tracing event thus provides an indication that part of the tracing event targets information matches part of the unique identifier.

The event detector connected to a rogue receiver may receive the tracing event targets information from tracing event message in the ECM in the data stream **110** and measure whether one or more rogue smart cards **153** associated with the sharing network has produced a tracing event (step **210**). If a tracing event is detected during a predetermined time, e.g. the crypto period of the ECM containing the tracing event message, the event detector may store the tracing event targets information together with event trigger information indicating that an event was measured (step **212**) in an event database.

Other ways of storing tracing data is also possible. For example, in one embodiment, the event detector may store tracing event targets information in different lists. For example tracing event targets information associated with a detected tracing event may be stored in an event trigger list and event targets information associated with no detection of a tracing event in a no_event trigger list.

Hence, from the above it follows that a tracing event allows the tracing system to obtain pieces of information (i.e. one or more bit values at one or more bit positions) associated with the unique identifier values of rogue smart cards.

This process is repeated by the ECMG until the predetermined number of experiments (executed e.g. at a rate of one experiment per crypto period) has been reached (step **218**). For each subsequent experiment in the tracing process, the ECMG generates a new event message, comprising new event information, e.g. a new DTV and a new BPV. The BPV is selected such that each time a new bit position value is used for generating a (possible) detectable tracing event. By using a relatively large number experiments compared to the number of bits in the unique identifier, measurement "faults", i.e. tracing events not triggered by a tracing event message, may be averaged out. This way, at the end of the measuring phase, the output event detector comprises an event database comprising tracing data, in particular tracing event targets information associated with trigger information. Analysis of data in the event database may allow identification of rogue smart cards.

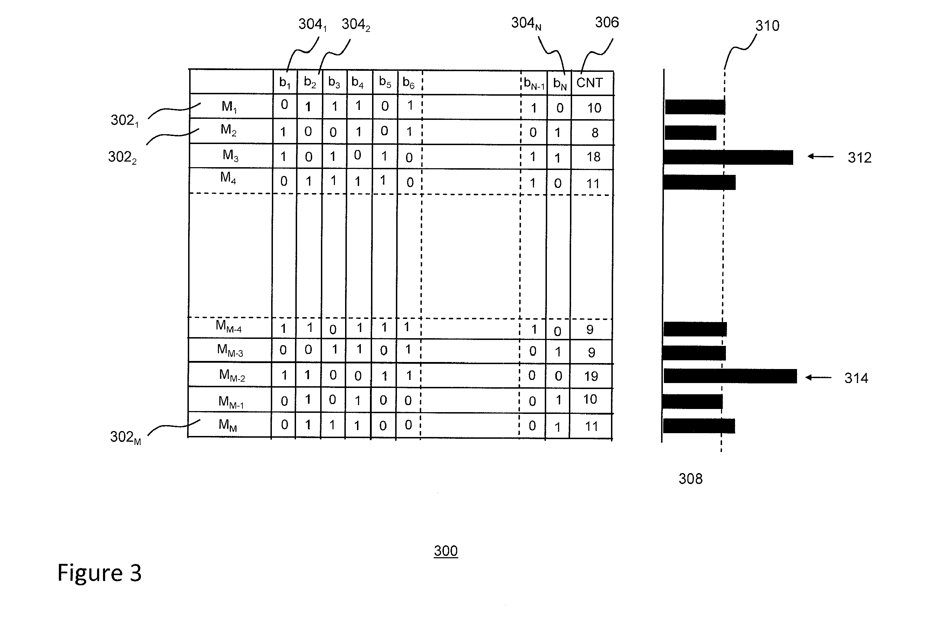

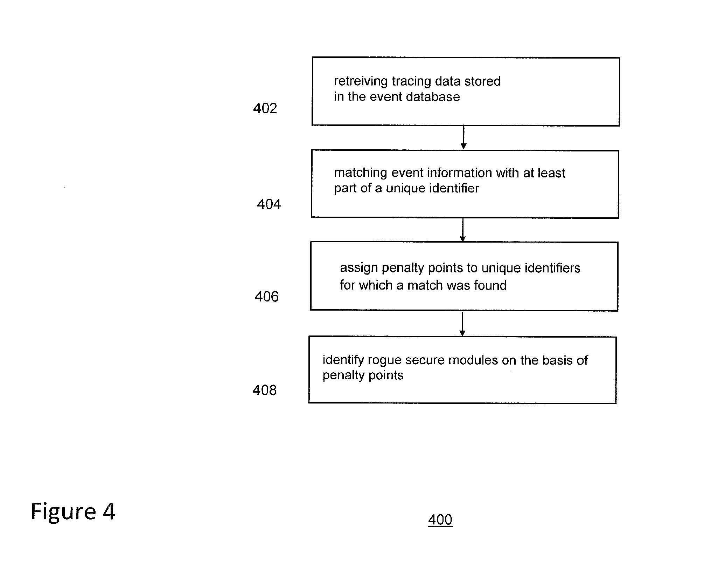

The data analysis phase is described in more detail with reference to **Fig. 3** and **4****.** In this phase, the event analyzer **166** may start analyzing data in the event database. To that end, the event analyzer may first generate a unique identifier database comprising the unique identifiers associated with the smart card population. The unique identifier database may be generated on the basis of the unique identifier generating function F_{M} using e.g. the smart card serial number and a secret key K_{M} as input parameters. Alternatively, the list of unique identifiers may be provided by the head-end to the event analyzer. Further, the event analyzer may associate a counter which each unique identifier value.

An example of a simple unique identifier database layout **300** according to one embodiment of the invention is depicted in **Fig. 3****.** The unique identifier database may be formed by bit sequences of pre-determined length N associated with the M unique identifier values in the smart card population **302₁-302_{M}** as generated on the basis of the function F_{M}. The database comprises N columns of bit values **304₁-304_{N},** wherein column i **304ᵢ** represents the bit values of each unique identifier value at bit position i. The last column at position N+1 comprises "counters" **306₁-306_{M},** wherein each counter is associated with a unique identifier value.

**Fig. 4** depicts a process of identifying rogue smart cards in a smart card population according to one embodiment of the invention. The identification process may be executed by the event analyzer using the unique identifiers and the tracing data in the event database. In a first step **402,** the event analyzer may retrieve tracing data associated with a predetermined number of tracing experiments from the event database. Such tracing data may comprise tracing event targets information (e.g. a DTV bit value and a BPV value) and associated event trigger information (e.g. event detected/no event detected).

For tracing event targets information associated with a detected event, the matching condition in the smart card was positive. Such matching condition may relate to the event information matching a predetermined part of a unique identifier. For example a matching condition may relate to the DTV bit value matching the binary value at bit position BPV of the unique identifier value from one of the one or more rogue smart cards in the smart card population. Hence, the event information comprises pieces of information, e.g. a bit value in a particular bit field of the unique identifier field in a rogue smart card. This way, on the basis of the event information in the tracing data stored in the event database, statistical analysis may be use to reconstruct the unique identifier value of rogue smart cards. Reconstruction may be realized by assigning a penalty point to the population of unique identifier values when a match is found.

A match may relate to the bit value at the bit position determined by the BPV matching a bit value at the bit position in the list of unique identifiers in the unique identifier database (steps **404**). For example, if event information relating to a match comprises a DTV bit value 0 and a BPV bit position value 4, the event analyzer may assign a penalty point to all unique identifier values in the unique identifier database comprising a "0" bit value at bit position 4. Each assigned penalty point is stored in the counter field of the unique identifier database (step **406**).

A similar process may be performed on event information associated with a no match. In that case, a penalty point may be assigned to the population of unique identifier values where the bit value at the bit position determined by the BPV does not match a bit value at the bit position in the list of unique identifiers in the unique identifier database. For example, if event information relating to a no match comprises a DTV bit value 0 and a BPV bit value 6, the event analyzer may assign a penalty point to all unique identifier values in the unique identifier database comprising a "1" bit value at bit position 6. Each assigned penalty point may be stored in the counter field of the unique identifier database. This process is repeated for all event information in the event database.

Using the process as described above, each unique identifier value in the unique identifier database will receive one or more penalty points. In **Fig. 3** an example of a possible state of the unique identifier database during the analysis phase is shown. On the average the most points will be assigned to the unique identifier values associated with rogue smart cards (in **Fig. 3** unique identifiers M₃ and M_{M}-₂). Due to the fact that the process is based on randomized event information, e.g. DTV bit values and randomized unique identifier values and a relatively large amount of experiments, incorrect measurements, e.g. delays originating from other sources than the tracing system but recognized by the event detector as an event associated with the tracing system, will be smeared out over the whole population of unique identifier values. Using a sufficiently large number of experiments (each being associated with at least one each ECM comprising an event message), will result in a "counting signal" **312,314** which extends well above the "noise level" denoted by dashed line **310.**

Hence, after analysis the unique identifier values associated with the highest number of penalty points, i.e. a number of penalty points substantially higher than the average number of penalty points assigned to the unique identifier values in the unique identifier database, may be identified as unique identifier values associated with rogue smart cards (step **408**). The thus identified number of rogue smart cards may be further investigated in order to positively identify the rogue smart cards in the population.

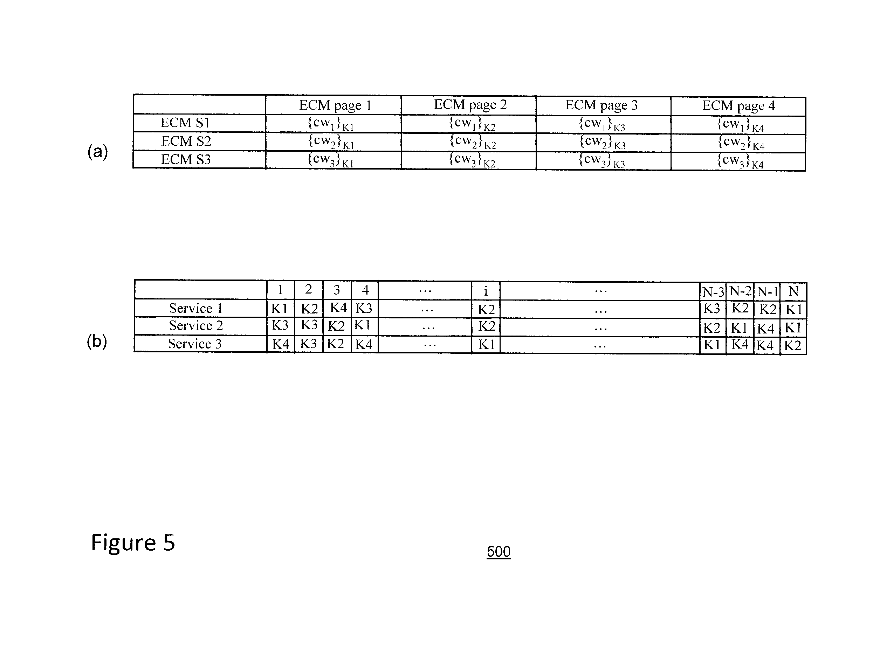

**Fig. 5** relates to another embodiment of the invention. In this embodiment a tracing event may be "induced" in the smart card using a set of related ECMs as a tracing event message. In contrast with the embodiment as described with reference to **Fig. 2-4****,** no dedicated tracing event generating function is required in the smart card. Instead, tracing events are induced in the smart card utilizing known processes, ECM decryption processes, in the smart card. This embodiment thus provides the advantage that the tracing method may be used on a smart card population comprising legacy smart cards, i.e. smart cards not comprising dedicated event generating functionality.

The head-end may commonly generate an ECM stream associated with a service stream (e.g. a TV program), wherein an ECM comprises a least one CW for descrambling data in the service stream. In this embodiment however, the head-end may generate ECMs comprising a number of ECM pages, wherein each ECM page contains the CW encrypted under a different service key: ECM[{CW}K1, {CW}K2, {CW}K3, ...]. A non-limiting example is depicted in Fig. 5 (a), which illustrates a number of such ECMs for broadcasting to a population of condition access devices. This example relates to a situation wherein the head-end broadcasts three scrambled services S1, S2, S3 and three associated ECM streams ECM S1, ECM S2, ECM S3, wherein each ECM in an ECM stream comprises a CW decrypted under four different product keys K1, K2, K3, K4.

If the tracing system triggers the head-end to start of a tracing process, the head-end, in particular the CA controller in the head-end, may provide the CA devices with product keys for decrypting ECMs. To that end, the head-end may allocate for each smart card a predetermined number of product keys it should use for decrypting the ECMs that carry the CWs for descrambling the services. The head-end may allocate these keys to each smart card in a quasi-random way. For example, random key allocation may be based of a function F_{K} using a smart card identifier, e.g. the smart card serial number, and a (random) secret key K_{K} as input variables.

**Fig. 5 (b)** depicts a possible key allocation for smart cards in the population. For example smart card number i should use K2 (i.e. the key at the first position of the key sequence) for decrypting ECMs associated with service stream 1, K2 (i.e. the key at the second position of the key sequence) for decrypting ECMs associated with service stream 2 and K1 (i.e. the key at the third position of the key sequence) for decrypting ECMs assocated with service stream 3. A unique key allocation may be sent to each CA device in the smart card population by means of EMMs.

Using a key allocation scheme as illustrated in **Fig. 5(b)****,** each smart card may be provided with a unique (pseudo) random sequence of service keys. As the smart card population is usually rather large, the number of services and/or the number of ECM pages may be increased in order to associated each smart card with a unique sequence of service keys. For example, each smart card in a large smart card population may be allocated with a unique random service key sequence using e.g. 14 services and 4 product keys. Ways of implementing such allocation scheme are mostly determined by bandwidth considerations. Hence, such key allocation scheme thus allows to identify each smart card in the population. Each smart card may be assigned to a unique random service key sequence which may be related to a smart card identifier, e.g. the smart card serial number.

After allocation of the service keys to the smart card, each smart card will receive and store the service key sequence in a secure memory. In operation, a smart card will receive ECMs in a format as described with reference to **Fig. 5(a)****.** The smart card may filter the ECMs out of the transport stream and determine which ECM page it should use for generating CWs associated with a particular service.

For example, the processor in smart card i of **Fig. 5(b)** allocated with the service key sequence [K2, K2, K1] may determine that it should use the second ECM page of ECMs in the first and second ECM streams for producing CWs associated with the first and second service stream respectively, and the first ECM page of ECMs in the third ECM stream for rendering CWs associated with the third service stream. The smart card will subsequently "lock" onto these ECM pages in order to ensure a substantially continuous and synchronized CW stream to the descrambler.

Thereafter, the head-end may start the phase of generating tracing data. The head-end may initiate the generation of event data by delivering ECMs in such a way that is causes a detectable tracing event for a selected range of smart cards. In one embodiment, a tracing event may be triggered by the introduction of a (pseudo)random change in the format of one or more ECM pages it broadcasts to the CA devices. For example, the head-end may generate a tracing event message by interchanging the first ECM page with the second ECM page in the ECM stream associated with the first service as depicted in **Fig. 5(a)****.** The ECMs in the first ECM stream comprising the modified sequence of ECM pages are broadcast to the smart card population where it may generate a tracing event in a predetermined part of the smart card population. In particular, it may induce a tracing event in smart cards, which are locked on the first or second ECM page for retrieving CWs associated with the first service stream.

After having received a set of ECM pages representing a tracing event message, e.g. an ECM wherein the ECM pages are in a different sequence, the smart card processor needs to find the ECM page for containing the CW encrypted with the correct service key. This processing will require additional time so that it will cause a small but detectable delay (e.g. 50-200 ms) in the CW provisioning to the descrambler.

An event detector coupled to an unauthorized receiver may receive the event message (i.e. the ECM comprising the reformatted ECM pages) and may start monitoring whether within a predetermined period of time a delay is detected or not. The event detector thereafter may store the result of the tracing experiment, i.e. the event information (i.e. the ECM comprising a modified sequence of ECM pages) together with event trigger information indicating whether or not a tracing event is detected into an event database.

Similar to the process as described with reference to **Fig. 2****,** the process of generating event data is repeated until a predetermined number of experiments have been executed. For each subsequent experiment in the tracing process, the head-end may generate a new event message, i.e. an ECM comprising a change in the sequence of the ECM pages. Preferably, the change is based on (pseudo) random information such that for a large number of experiments on average all the smart cards in the smart card population are subjected to changes in the sequence of the ECM pages. Measurement "faults", i.e. delays not originating from a tracing event, may be averaged out in the process. This way, at the end of the measuring phase, the event detector comprises an event database filled with tracing data. Analysis of data in the event database may allow identification of rogue smart cards.

The data analysis phase is similar to the one described with reference to **Fig. 3** and **4****.** In this case, the event analyzer **166** may start generate a key allocation database comprising the unique key sequences assigned by the head-end to each smart in the smart card population. The key allocation database may be generated on the basis of a function F_{K} using e.g. the smart card serial number and a (random) secret key K_{K} as input parameters. Alternatively, the list of allocated key sequences may be provided by the head-end to the event analyzer. Further, the event analyzer may associate a counter which each key sequence.

The event analyzer may retrieve event information in the event database, i.e. a sequence of service keys and event rigger information. The event information may relate event information, which caused a tracing event, i.e. event information wherein the smart card processor determined a change in the ECM pages it was using. For example, the event information may relate to the exchange of the first ECM page (associated with service key K1) with the second ECM page (associated with service key K2) in the first ECM stream (associated with the first service stream) as depicted in **Fig. 5(a)****.** In that case, the event analyzer may assign a penalty point to each key sequence in the key allocation database, comprising K1 or K2 at the first position in the sequence (i.e. all smart cards using K1 or K2 for decrypting the first service). This process may be repeated for all experiments stored in the event database in a similar was as described with reference to **Fig. 3** and **4****.** At the end of the analysis, the key sequences associated with the highest number of penalty points are identified and associated with a corresponding public smart card identifier, e.g. the smart card serial number. These identified smart cards are considered to be suspected smart cards, which require further investigation.

Other implementations are possible without departing from the invention. For example, in one variant, the ECMG may be configured to generate for each CW provided by the CWG a first ECM stream, comprising first each comprising a CW encrypted by a first key K1 (ECM[{CW}_{K1}]) and a second ECM stream comprising the CWs generated by the CWG encrypted by a second key K2 (ECM[{CW}_{KZ}]). The synchronizer in the head-end may introduce a small but detectable delay between the transmission of the first and second ECM stream to the smart card population.

Then, the event generator may instruct the head-end to start the tracing process by producing a delayed second ECM stream and by sending part of the smart card population an event message instructing part of the smart card population, e.g. 20% of the population, to retrieve CWs originating from said second ECM streams. This event message comprising, the smart card instructions and the second key K2, may be sent by the CA control system in the form of an EMM to a desired part of the smart card population. The smart cards receiving the event message, i.e. the EMM, will be instructed to use the second ECM stream, which comprises a small detectable delay with respect to the first ECM stream.

Hence, if one or more rogue smart cards are present in part of the smart card population, which is targeted by the tracing system, the event detector may detect delays in the CW stream sent to the unauthorized detector, which correlate with the delay in the second ECM stream. If an event is detected, the tracing system may allocate a counting point to the smart cards, which were targeted by the tracing system. This process is repeated by targeting different groups using EMMs as described above. After a predetermined number of experiments, smart cards associated with the highest number of counting points may be marked as suspected.

Although the invention is described with reference to tracing events introducing a disturbance, e.g. a delay in the CW provisioning to the scrambler, other types of tracing events are also foreseen. For example, in one embodiment tracing events may relate to watermarking techniques wherein at the head-end a piece of content is watermarked and detected by an event detector in the analog signal displayed to a user.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. The invention is not limited to the embodiments described above, which may be varied within the scope of the accompanying claims.

## Claims

1. Method for generating tracing data, preferably an event database comprising tracing data, for tracing rogue secure modules in a population of secure modules, wherein said rogue secure modules are configured for unauthorized provisioning of control words to a control word sharing network, said method comprising executing a predetermined number of tracing experiments on said population of secure modules, each experiment comprising:
sending at least one tracing event message to each secure module in said population, wherein event information in said tracing event message is used to select at least part of said secure modules in said population to generate a tracing event;
in response to the reception of said at least one tracing event message, a tracing event detector monitoring for a predetermined time the presence of at least one tracing event in said control word sharing network; and,
storing tracing data in an event database, said tracing data comprising said event information and event trigger information indicating whether or not a tracing event is detected.

2. Method according to claim 1, wherein said tracing event messages are sent in an entitlement control message or in an entitlement management message to said population of secure modules.

3. Method according to claims 1 or 2, comprising:
a secure module generating a tracing event on the basis of said event information, preferably randomized event information, in said event message and at least a part of a unique identifier, preferably randomized unique identifier, associated with said secure module, preferably said secure module generating a tracing event when event information in said event message matches at least part of said unique identifier.

4. Method according to any of claims 1-3, wherein said event information in said tracing event message comprises an instruction to execute an event generating function in said secure module or wherein said event information in said tracing event message induces a tracing event in said secure module.

5. Method according to any of claims 1-4, comprising:
said tracing event generating a disturbance in the control word provisioning to a receiver connected to said control word sharing network, preferably a delay in the control word provisioning to said receiver;
said tracing event detector monitoring the control word stream transmitted to said receiver; and,
determining the presence of a tracing event if said disturbance in said control word stream is detected.

6. Method according to any of claims 1-4, comprising:
said tracing event generating a disturbance, preferably a watermark, in the output of a receiver connected to said control word sharing network;
said tracing event detector monitoring the output signal of said receiver; and,
determining the presence of a tracing event if said disturbance in the output signal is detecting.

7. Method for tracing rogue secure modules in a population of secure modules on the basis of tracing data generated by the method as defined by any of claim 1-6 comprising:
providing unique identifiers associated with the population of secure modules on which tracing experiments were preformed;
identifying the presence of one or more rogue secure modules in said population on the basis of said unique identifiers and the tracing event data.

8. Method according to claim 7, wherein for each tracing experiment stored in said event data executing the steps of:
providing event information and event detection information;
matching at least part of said event information with said unique identifiers if said event trigger information indicates detection of an event;
assigning a penalty point to each unique identifier for which a match is found; and,
identifying one or more rogue secure modules on the basis of the amount of penalty points assigned to each unique identifier.

9. Tracing system for tracing rogue secure modules in a population of secure modules, said secure modules being configured to receive scrambled data originating from a conditional access system and wherein said rogue secure modules are configured for unauthorized provisioning of control words to a control word sharing network, comprising:
an event generator for for initiating a predetermined number of tracing experiments on a population of secure modules; and, for instructing a conditional access data transmitter in the conditional access system to sent event messages to said population of secure modules wherein event information in said tracing event message is used to select at least part of said secure modules in said population to generate a tracing event;
at least one tracing event detector configured for receiving said at least one tracing event message; and, in response the reception of said at least one tracing event message, monitoring for a predetermined time the presence of at least one tracing event in said control word sharing network; and, for storing tracing data in an event database, said tracing data comprising said event information and event trigger information indicating whether or not a tracing event is detected.

10. Tracing system according to claim 9 further comprising:
a data analyzer for identifying one or more rogue secure modules in said population of secure modules on the basis of tracing data stored in said event database, said data analyzer being configured to providing unique identifiers associated with the population of secure modules on which tracing experiments were performed; and said data analyzer being configured for identifying the presence of one or more rogue secure modules in said population on the basis of said unique identifiers and the tracing event data.

11. A conditional access data transmitter, preferably a head-end, for use with a tracing system according to claims 9 or 10, said conditional access data transmitter configured for receiving instruction from an event generator, for sending event messages, preferably in an encrypted message, more preferably in entitlement control messages and/or in entitlement management messages, to said population of secure modules, wherein event information in said tracing event message is used to select at least part of said secure modules in said population to generate a tracing event.

12. A tracing event detector for use in a tracing system according to claims 9 or 10, said tracing event detector being configured for receiving said at least one tracing event message; and, in response the reception of said at least one tracing event message, monitoring for a predetermined time the presence of at least one tracing event in said control word sharing network; and, for storing tracing data in an event database, said tracing data comprising said event information and event trigger information indicating whether or not a tracing event is detected.

13. A data analyzer for use in a tracing system according to claims 9 or 10, said data analyzer being configured for processing tracing experiments stored in said event data; said data analyzer being configured to receive event information and event trigger information; to match at least part of said event information with said unique identifiers if said event trigger information indicates detection of an event; to assign a penalty point to each unique identifier for which a match is found; and, to identify one or more rogue secure modules on the basis of the amount of penalty points assigned to each unique identifier.

14. A secure module, preferably a smart card, for use with a tracing system according to claims 9 or 10 comprising:
at least one tracing event generating function; said function being instructed by event information sent in tracing event messages to said secure module.

15. A computer program product for generating tracing data comprising software code portions configured for, when run on one or more computers, executing the method according to any of claims 1-6; or, a computer program product for tracing rogue secure modules on the basis of tracing data comprising software code portions configured for, when run on one or more computers, executing the method according to claims 7 or 8.
